# FASCICULE DE BREVET EUROPEEN

(11) **EP 1 402 285 B1**
(45) Date de publication et mention de la délivrance du brevet: **07.04.2010**
(21) Numéro de dépôt: 02745524.5
(22) Date de dépôt: 13.06.2002
(51) Int. Cl.: G01T 1/17

(54) **DISPOSITIF DE DIMINUTION DU TRAINAGE ET DU COURANT D'OBSCURITE D'UN DETECTEUR DE PARTICULES, NOTAMMENT D'UN DETECTEUR DE PHOTONS**
GERÄT ZUR VERMINDERUNG DER VERSCHMIERUNG UND DES DUNKELSTROMS BEI EINEM TEILCHENDETEKTOR, INSBESONDERE BEI EINEM PHOTONENDETEKTOR
DEVICE FOR REDUCING THE LAG AND THE DARK CURRENT IN A PARTICLE DETECTOR, IN PARTICULAR A PHOTON DETECTOR

(30) Priorité: 15.06.2001 FR 0107856
(43) Date de publication de la demande: 31.03.2004
(73) Titulaire: COMMISSARIAT A L'ENERGIE ATOMIQUE, 75015 Paris (FR)
(72) Inventeur: ARQUES, Marc, F-38100 Grenoble (FR)
(74) Mandataire: Poulin, Gérard
(86) Numéro de dépôt international: PCT/FR2002/002028
(87) Numéro de publication internationale: WO 2002/103390

(56) Documents cités:
- EP-A- 1 094 334
- FR-A- 2 626 432
- US-A- 5 225 682

## Description

### DOMAINE TECHNIQUE

La présente invention concerne un dispositif destiné à améliorer le signal fourni par un détecteur de particules, notamment un détecteur de photons, en vue de diminuer le traînage (en anglais « lag ») et le courant d'obscurité (en anglais « dark current ») de ce détecteur.

Ce détecteur peut être ponctuel ou matriciel (en particulier linéaire).

L'invention permet de diminuer le traînage du détecteur. Elle est donc utile lorsque ce détecteur présente ce phénomène de façon intrinsèque. C'est en particulier le cas de nombreux détecteurs de rayons X ou de rayons gamma, détecteurs qui utilisent, pour la détection de ces rayonnements, des matériaux semiconducteurs tels que le silicium amorphe, CdTe, PbO, PbI₂, HgI₂, Se et TlBr, dont les défauts cristallins engendrent un traînage.

On rencontre aussi ce phénomène dans des assemblages comprenant un scintillateur et un photodétecteur, le scintillateur étant, par exemple, en iodure de césium ou en oxysulfure de gadolinium, et le photodétecteur étant, par exemple, en silicium (amorphe, polycristallin ou monocristallin) ou en germanium.

L'invention permet aussi de réduire le courant d'obscurité des détecteurs, chose qui est souvent très utile car ce courant est en particulier fonction de la température et perturbe donc les images engendrées grâce aux détecteurs.

L'invention s'applique en particulier :
- aux détecteurs de rayons X utilisés en mode de fluoroscopie et donc à la cadence vidéo,
- aux détecteurs de rayons X prévus pour alterner des séquences de prise de vue à forte dose et des séquences de prise de vue à faible dose, dans le cas où l'on souhaite que ces dernières ne soient pas polluées par une mémoire des images précédentes, obtenues à forte dose, ce qui est le cas de la cardiologie ou de la fluoroscopie,
- aux détecteurs de rayons X destinés à la radiographie, pour lesquels on souhaite qu'il n'y ait aucun traînage d'une image à l'autre (bien que la cadence de prise d'image soit faible, de l'ordre de 1 seconde),
- aux détecteurs destinés à la tomographie à rayons X, qui doivent pouvoir « suivre » une atténuation de l'éclairement de l'ordre de 10⁵ en environ une milliseconde,
- aux détecteurs de rayons X ou gamma avec lesquels on fait de la spectrométrie c'est-à-dire que l'on mesure l'énergie de chaque photon incident, le traînage de ces détecteurs créant, après détection d'un photon, un décalage (« offset ») qui s'atténue lentement au cours du temps et qui perturbe la mesure d'énergie du photon suivant,
- aux détecteurs de rayons X ou gamma avec lesquels on compte les photons dont l'énergie dépasse un seuil prédéfini, détecteurs pour lesquels, après détection d'un photon, le traînage engendre un décalage (en anglais « offset ») qui s'atténue lentement au cours du temps et modifie, par ajout au photon suivant, le seuil effectif de détection de ce photon, et
- aux détecteurs d'autres particules, par exemple les neutrons ou les protons.

### ETAT DE LA TECHNIQUE ANTERIEURE

Dans les détecteurs fonctionnant en mode d'intégration, la réduction du traînage s'obtient généralement par une adaptation longue et difficile de la technique de fabrication de ces détecteurs ou par un post-traitement informatique des informations acquises au moyen de ces détecteurs.

La première solution est la meilleure mais se heurte aux limites du savoir-faire relatif à la fabrication des matériaux constitutifs des détecteurs.

La deuxième solution nécessite des moyens de traitement informatique qui peuvent être importants, d'autant plus que le traînage d'un détecteur à partir d'un instant t dépend généralement de tout l'éclairement qu'il a subi avant cet instant t et non pas seulement de la dernière image formée avant l'instant t. Cela limite l'efficacité des corrections par post-traitement.

Pour réduire le traînage des détecteurs fonctionnant en mode de comptage, il est connu de supprimer la composante continue du courant fourni par un détecteur de ce genre grâce à un filtre passe-haut. Mais chaque impulsion est alors suivie d'une traînée (en anglais « undershoot ») négative, liée à la fréquence de coupure de ce filtre passe-haut.

Bien que le traînage correspondant soit souvent plus court que le traînage du détecteur et qu'il existe des dispositifs d'accélération de la récupération, cette solution connue de réduction du traînage nécessite que la cadence d'arrivée des particules à détecter, par exemple des photons, soit relativement lente de façon que le détecteur ait retrouvé son niveau d'équilibre avant l'événement suivant.

Dans tout ce qui suit, on considèrera seulement des détecteurs de rayons X et seulement des détecteurs fournissant des électrons, par souci de simplification. Mais l'homme du métier transposera aisément la description correspondante aux autres détecteurs de particules cités plus haut ainsi qu'aux détecteurs fournissant des trous.

Considérons d'abord brièvement le phénomène de traînage.

Lors de l'absorption d'un photon X dans un photodétecteur, une certaine quantité N de paires électron-trou est créée. Des problèmes apparaissent lorsque des électrons et/ou des trous sont piégés.

L'un de ces problèmes résulte du fait que, pour une même quantité N de charges créées lors de l'absorption du photon X, le nombre de charges collectées varie en fonction de l'endroit où ce photon est absorbé. Étant donné que les mobilités et les durées de vie des électrons et des trous sont généralement différentes, la somme Q1+Q2, où Q1 (respectivement Q2) est la charge totale des électrons (respectivement des trous) piégés pendant leur déplacement vers l'anode (respectivement la cathode) du photodétecteur, n'est pas constante.

La présente invention ne concerne pas ce problème et, dans ce qui suit, on considèrera, par souci de simplification, que le nombre Q1+Q2 est constant.

Le traînage est un autre problème résultant du piégeage des électrons et/ou des trous.

Dans la suite de la description, on verra que la détection de chaque photon engendre d'abord un premier courant, bref et intense, qui est appelé « impulsion » dans ce qui suit et qui correspond à la migration des charges, sans piégeage, vers les électrodes du détecteur, puis un deuxième courant, plus long mais moins intense, qui est appelé « traîne » (en anglais « tail ») dans ce qui suit et qui est dû au piégeage.

L'un des effets du traînage, auquel remédie la présente invention, résulte du fait que, pendant le temps où elles existent, les charges piégées Q1 et Q2 modifient le courant circulant dans le détecteur et augmentent en général ce courant.

En particulier, lorsque l'absorption du photon X est suivie d'une période d'obscurité, il existe une traîne après l'impulsion de courant correspondant à l'évacuation des charges non piégées. Pendant cette traîne le courant est supérieur au courant d'obscurité. Cette, augmentation peut s'expliquer par
(a) une modification de la concentration de charge dans le matériau semiconducteur par les charges piégées,
(b) la génération de paires électron-trou, localement favorisée par les charges piégées,
(c) la génération d'un courant dû à la libération de charges piégées et
(d) la modification de la répartition du champ électrique dans le détecteur par les charges piégées.

Pendant la traîne, la charge totale collectée dans le circuit extérieur de lecture, auquel est relié le détecteur, peut augmenter significativement la charge collectée pendant l'impulsion initiale. Il existe donc un gain de photoconduction qui est généralement néfaste car il s'obtient au prix d'un traînage.

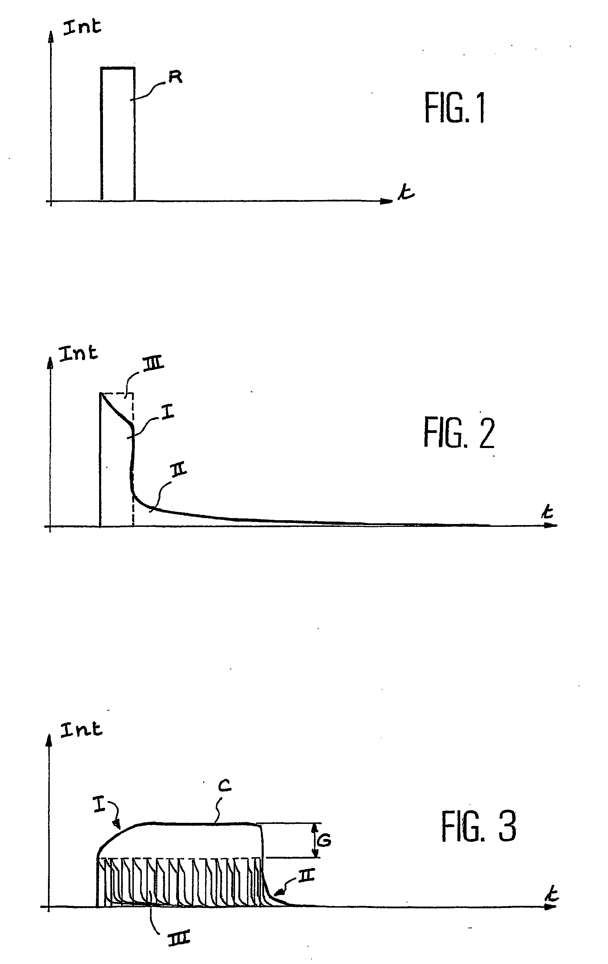

Les figures 1 à 3 sont destinées à résumer graphiquement l'effet du traînage auquel la présente invention vise à remédier. Elles concernent le cas simplifié où un seul type de porteurs se déplace. Mais l'invention s'applique aussi si les deux types de porteurs se déplacent.

La figure 1 montre la réponse R à un photon unique, dans le cas d'un détecteur idéal, c'est-à-dire sans piégeage, cette réponse étant la courbe des variations de l'intensité Int du courant fourni par le détecteur en fonction du temps t.

La figure 2 montre la réponse à un photon unique dans le cas d'un détecteur où se produit le phénomène de piégeage. La zone I correspond à l'impulsion (évacuation des charges créées qui ne subissent pas de piégeage), la zone II correspond à la traîne due au piégeage, qui est susceptible de dépasser le déficit initial, et la zone III correspond au déficit de charge qui est dû au piégeage pendant le début de l'impulsion.

La figure 3 montre la réponse à une rafale de photons également dans le cas d'un détecteur où se produit le phénomène de piégeage. La zone I correspond au traînage à l'éclairement, la zone II correspond au traînage à l'extinction, chaque zone III correspond à la réponse unitaire à un photon, la ligne C correspond au courant global et l'écart G correspond au gain de photoconduction.

Comme la traîne, le courant d'obscurité s'ajoute au photocourant et varie en fonction du temps, en particulier à cause des changements de température. L'invention vise également à diminuer ce courant d'obscurité.

On connaît déjà un dispositif d'amélioration du signal fourni par un détecteur de rayons X par le document suivant :
FR 2626432A, Appareil de tomographie à rayons X, invention de Marc Cuzin et Francis Glasser, correspondant à EP0326471A et à US5012498A.

Dans ce dispositif connu, après chaque impulsion, on fait une mesure du courant résiduel et l'on soustrait le courant résiduel ainsi mesuré de la valeur de l'impulsion.

Cependant, cette mesure est ponctuelle et prévue lors du séquencement des mesures. Il n'est pas certain qu'elle corresponde au minimum de courant entre deux impulsions successives et, si ces deux impulsions successives sont trop -proches l'une de l'autre, l'erreur de mesure peut être importante, en particulier dans le cas d'un train d'impulsions.

### EXPOSÉ DE L'INVENTION

La présente invention a pour but de remédier à l'inconvénient précédent.

L'invention propose de suivre « pas à pas » l'évolution du signal fourni par le détecteur et de détecter réellement le minimum de courant entre deux impulsions successives.

Il faut de plus que la mémoire d'un minimum détecté à un moment donné s'efface progressivement pour que les minima ultérieurs puissent être aussi détectés.

De façon précise, la présente invention a pour objet un dispositif d'amélioration du signal fourni par un détecteur de particules, notamment un détecteur de photons, ce détecteur étant apte à fournir des impulsions de courant lorsqu'il reçoit ces particules, le dispositif comprenant des moyens de transformation des impulsions de courant en impulsions de tension, ce dispositif étant caractérisé en ce qu'il comprend en outre :
- des moyens de détection d'un extremum de tension entre une impulsion de tension fournie par les moyens de transformation et une impulsion de tension suivante,
- des moyens de soustraction de la valeur de l'extremum ainsi détecté à cette impulsion de tension fournie par les moyens de transformation, de manière à améliorer le signal correspondant, fourni par le détecteur, et
- des moyens de réinitialisation de l'extremum.

Selon un premier mode de réalisation particulier du dispositif objet de l'invention, les moyens de transformation peuvent comprendre un amplificateur qui est pourvu d'une impédance de contre-réaction.

Cette impédance est par exemple une résistance ou un condensateur entre les bornes duquel est montée une résistance.

Selon un deuxième mode de réalisation particulier, les moyens de transformation comprennent :
- un premier condensateur,
- un premier transistor par l'intermédiaire duquel les charges engendrées dans le détecteur, par les particules détectées par ce dernier, sont transférées au premier condensateur, et
- un premier amplificateur prévu pour polariser ce premier transistor;

Selon un mode de réalisation particulier de l'invention, les moyens de détection de l'extremum de tension comprennent :
- une diode, qui est montée entre la sortie des moyens de transformation et les moyens de soustraction, et
- un condensateur qui est monté entre une source de tension continue et une borne qui est commune aux moyens de soustraction et à la diode.

Selon un autre mode de réalisation particulier, les moyens de détection de l'extremum de tension comprennent :
- un deuxième amplificateur qui est relié à un premier condensateur,
- un deuxième condensateur monté entre la sortie des moyens de détection de l'extremum et une source de tension continue,
- une résistance montée entre la sortie des moyens de détection de l'extremum et une source de tension continue,
- des moyens de redressement de tension qui relient le deuxième amplificateur au deuxième condensateur, et
- un troisième amplificateur prévu pour asservir la valeur de l'extremum détecté à une tension prédéfinie (les sources de tension pouvant être les mêmes ou différentes).

Les moyens de redressement de tension peuvent être choisis parmi une diode, un transistor MOS de type N, et un transistor MOS de type P.

Selon un autre mode de réalisation particulier de l'invention, les moyens de soustraction comprennent :
- un troisième condensateur,
- un deuxième transistor à travers lequel la partie impulsionnelle de la charge arrivant à un premier condensateur est envoyée au troisième condensateur, et
- un quatrième amplificateur prévu pour réduire l'impédance apparente du deuxième transistor.

Les moyens de soustraction peuvent comprendre en outre une autre résistance qui est montée entre le premier condensateur et le deuxième transistor.

Selon un mode de réalisation particulier de l'invention, les moyens de réinitialisation comprennent une résistance qui est montée entre une borne des moyens de soustraction et une source de tension.

Selon un autre mode de réalisation particulier, le dispositif comprend en outre des moyens de suppression du bruit de fond qui est susceptible d'affecter le signal fourni par les moyens de soustraction.

Les moyens de suppression du bruit peuvent comprendre des moyens de décalage de tension (en anglais « voltage offset ») du signal, qui sont placés entre la sortie des moyens de transformation et une borne des moyens de soustraction.

Ces moyens de décalage de tension sont destinés à simplifier les moyens de suppression de bruit de fond en leur permettant de travailler par rapport à une tension de référence qui peut être nulle.

### BRÈVE DESCRIPTION DES DESSINS

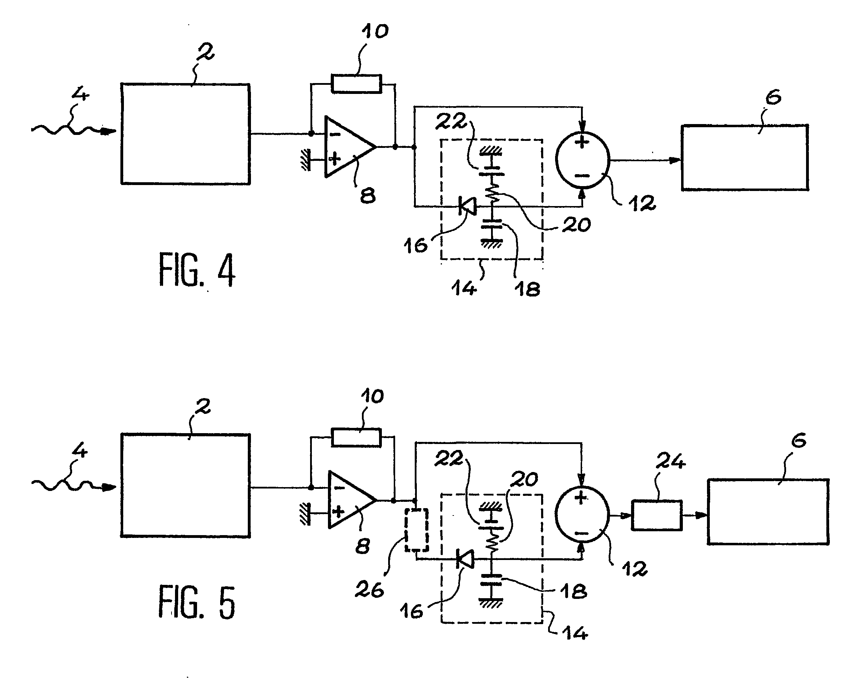

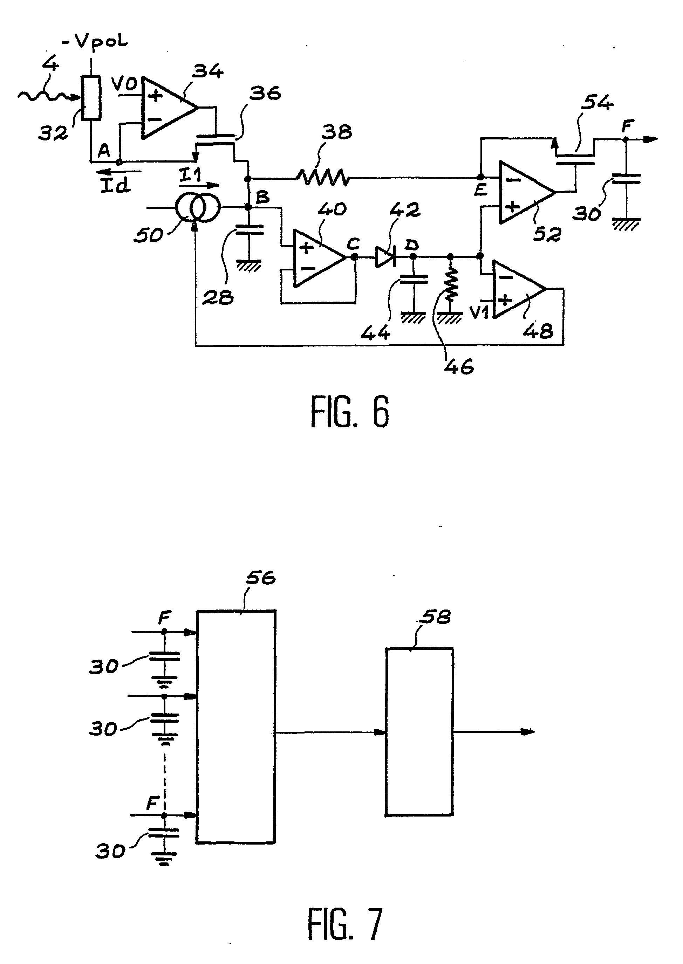

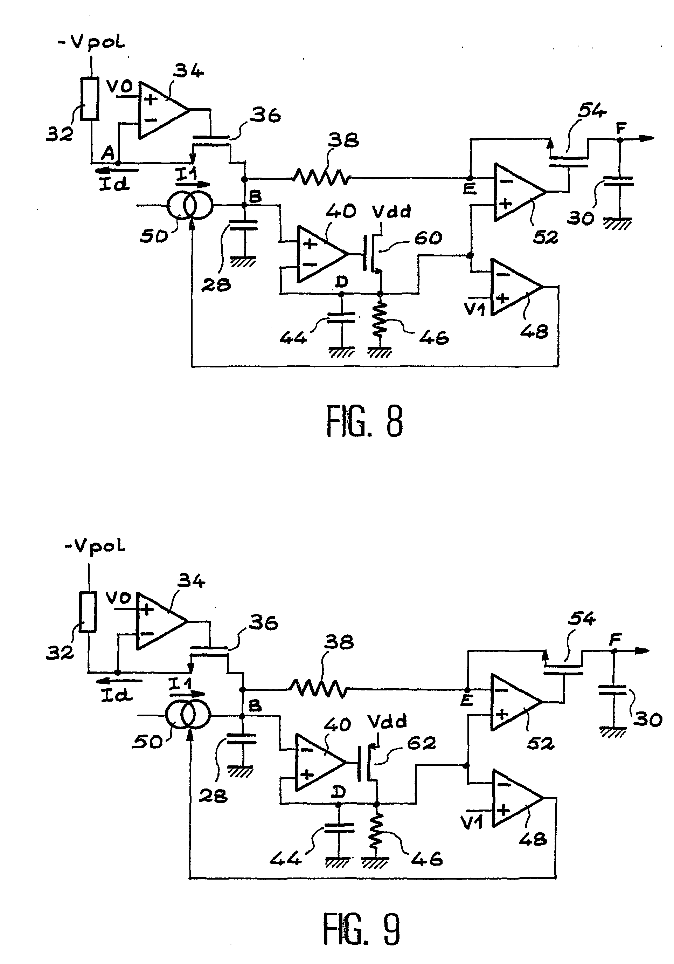

La présente invention sera mieux comprise à la lecture de la description d'exemples de réalisation donnés ci-après, à titre purement indicatif et nullement limitatif, en faisant référence aux dessins annexés sur lesquels :
■ les figures 1 à 3 illustrent respectivement la réponse d'un détecteur idéal à un photon unique, la réponse d'un détecteur avec piégeage à un photon unique et la réponse d'un détecteur avec piégeage à une rafale de photons et ont déjà été décrites,
■ la figure 4 est une vue schématique d'un mode de réalisation particulier du dispositif objet de l'invention,
■ la figure 5 illustre schématiquement une variante du dispositif de la figure 4, dans laquelle on a ajouté un décalage (en anglais « offset ») sur la ligne de détection de minimum de ce dispositif,
■ la figure 6 illustre schématiquement un exemple de dispositif conforme à l'invention,
■ la figure 7 est une vue schématique et partielle d'un autre dispositif conforme à l'invention, qui est associé à plusieurs détecteurs,
■ la figure 8 illustre schématiquement une variante du dispositif de la figure 6, et
■ la figure 9 illustre schématiquement une autre variante du dispositif de la figure 6.

### EXPOSÉ DÉTAILLÉ DE MODES DE RÉALISATION PARTICULIERS

Le dispositif conforme à l'invention, qui est schématiquement représenté sur la figure 4, est destiné à améliorer le signal électrique fourni par un détecteur 2. Ce détecteur 2 est destiné à détecter un rayonnement X incident qui a la référence 4 sur la figure 4. Le signal ainsi amélioré est envoyé à l'entrée de moyens électroniques 6 de traitement de signal qui dépendent de l'utilisation du détecteur.

Le détecteur 2 est soit un détecteur simple tel qu'une diode ou une photorésistance, munie de moyens de polarisation, soit un détecteur complexe, comprenant un détecteur simple et des moyens complexes de polarisation ou de liaison. L'important est que ce détecteur complexe fournisse un courant représentatif des impulsions de courant fournies par le détecteur simple qu'il comprend.

Selon l'invention, on analyse les impulsions de courant fournies par le détecteur lorsque celui-ci reçoit des particules, à savoir des photons X dans l'exemple considéré. La valeur du courant entre les impulsions est la somme du courant d'obscurité et de la traîne des impulsions précédentes.

On mesure cette valeur entre les impulsions et on la soustrait du signal brut, signal qui est directement issu du détecteur.

Dans l'invention, il n'est pas nécessaire que cette valeur soit mesurée systématiquement entre les impulsions. L'invention tolère donc des empilements d'impulsions, contrairement aux dispositifs connus dans lesquels on effectue un comptage.

Le dispositif conforme à l'invention, qui est représenté sur la figure 4, comprend un amplificateur 8. Dans l'exemple considéré, il s'agit d'un amplificateur différentiel dont l'entrée - est connectée à la sortie du détecteur 2 tandis que l'entrée + est mise à la masse. La sortie de l'amplificateur 8 est reliée à son entrée - par l'intermédiaire d'une impédance de contre-réaction 10.

Cette impédance 10 est soit une résistance de valeur R1, auquel cas une impulsion de courant I(t) est transformée par l'amplificateur en une impulsion de tension V(t) = R1.I(t), soit un condensateur entre les bornes duquel est montée une résistance, auquel cas l'impulsion de tension fournie par la sortie de l'amplificateur représente une moyenne temporelle glissante des impulsions de courant.

Le dispositif de la figure 4 comprend aussi un soustracteur 12, dont la borne + est reliée à la sortie de l'amplificateur 8, ainsi qu'un détecteur de minimum 14 dont l'entrée est reliée à la sortie de l'amplificateur 8 et dont la sortie est reliée à l'entrée - du soustracteur 12.

Ce détecteur de minimum est schématiquement représenté dans sa forme la plus simple sur la figure 4 et comprend une diode 16 et un condensateur 18, de capacité Cm, ainsi qu'une résistance 20 de valeur Rm, permettant d'obtenir la réinitialisation du minimum avec une constante de temps Rm. Cm.

La cathode de la diode 16 est reliée à la sortie de l'amplificateur 8 tandis que l'anode de cette diode est reliée à l'entrée - du soustracteur 12. Le condensateur 18 est monté entre l'anode de la diode et la masse. La résistance 20 est montée entre cette anode et la borne + d'une source 22 de tension, de valeur Vdd, permettant l'effacement du minimum détecté, la borne - de cette source de tension étant mise à la masse.

Cependant tout autre détecteur de minimum approprié est utilisable dans le dispositif de la figure 4 pour détecter un minimum de tension entre une impulsion de tension, fournie par l'amplificateur 8, et l'impulsion suivante (en vue de soustraire, grâce au soustracteur 12, la valeur de ce minimum à cette impulsion fournie par l'amplificateur 8).

Remarquons que la traîne n'est gênante pour la présente invention que si elle est longue par rapport à la durée de l'impulsion de courant correspondante. En effet, si elle est courte par rapport à cette durée, elle n'induit aucun traînage temporel significatif. En pratique, il existe souvent plusieurs ordres de grandeur entre la durée de l'impulsion de courant et la durée de la traîne.

A l'échelle d'une ou de quelques impulsions, la traîne peut donc être considérée comme une constante, ou un décalage (en anglais « offset ») qui s'ajoute à l'impulsion de courant à la sortie du détecteur de rayonnement 2. Le détecteur de minimum 14 permet de mesurer cette traîne et le soustracteur 12 permet de la supprimer.

La constante de temps Rm.Cm doit être réglée de façon qu'elle soit plus courte qu'un temps caractéristique de l'évolution de la traîne, tant aussi bien au début qu'à la fin d'une période donnée « d'éclairement » par les photons. L'évolution de la traîne à la fin de cet éclairement est généralement la plus lente et ne constitue donc pas le critère de réglage. L'évolution en début d'éclairement correspond à l'empilement des traînes respectives des photons du début de l'éclairement.

La constante de temps doit en outre être réglée de façon qu'elle soit plus longue que là durée d'une impulsion ou d'une série d'impulsions qui se chevauchent, de façon à ne pas dériver significativement pendant la durée de cette ou ces impulsions.

On peut faire quatre remarques en ce qui concerne le réglage de la constante de temps.
1° Si cette constante de temps est trop longue par rapport au flux de photons, on obtient à la sortie du soustracteur 12 un dépassement (en anglais « overshoot ») au début de l'impulsion. Si cela est gênant, on peut diminuer la constante de temps ou limiter la bande passante du soustracteur 12 ou celle de l'amplificateur (référence 8 sur la figure 4) pour éliminer ce dépassement.
2° Si le flux de photons est important, les impulsions de courant sont susceptibles de se chevaucher. Le dispositif que l'on a décrit reste valable tant que le minimum représentant la traîne apparaît de temps en temps entre deux impulsions. Il faut bien entendu régler la constante de temps du détecteur de minimum 14 pour que le minimum détecté ne dérive pas trop entre deux de ses apparitions entre deux impulsions.
   Il est donc important de noter que le dispositif continue à fonctionner lors d'une utilisation avec un fort flux de photons, flux pour lequel les empilements sont fréquents, alors que les dispositifs à comptage, qui résolvent aussi partiellement les problèmes de traînage, ne fonctionnent plus avec un tel flux.
3° Si le flux de photons est suffisamment élevé pour que le minimum n'apparaisse que très rarement, la valeur du minimum détecté dérive progressivement vers le haut. Cela réduit le signal à la sortie du soustracteur 12. On réalise ainsi une atténuation progressive de la sensibilité du dispositif, atténuation que l'on appelle aussi « fonction gamma ». Bien que cette caractéristique ne soit pas le but principal de la présente invention, elle est appréciable dans certains cas.
4° En pratique, lors d'un premier essai de réglage, la constante de temps peut être de l'ordre de 30 à 300 fois la durée de l'impulsion correspondant à la détection d'un photon X.

Le dispositif de la figure 4 peut être amélioré pour réduire le bruit dû au courant d'obscurité.

Après le soustracteur 12, le niveau de repos entre les impulsions est égal à zéro par construction. Toutefois ce niveau de repos possède le bruit du signal direct, signal qui est directement issu de l'amplificateur 8, ainsi que le bruit du signal qui a été soustrait de ce signal direct.

Dans le cas où la suite du traitement (effectuée dans les moyens de traitement 6) est analogique, il est intéressant de supprimer le bruit de fond du signal de sortie du soustracteur 12 en interposant, entre la sortie de ce dernier et les moyens électroniques de traitement, des moyens appropriés 24 de suppression de bruit de fond, par exemple un système d'ébasage qui impose que, lorsque la tension de sortie du soustracteur 12 devient inférieure à une tension de seuil, la tension de sortie du système d'ébasage, ou ébaseur 24, soit égale à la tension de seuil (voir la figure 5).

On obtient alors des impulsions qui sont certes légèrement amputées mais entre lesquelles le bruit est nul. Cela est particulièrement important dans le cas de modes où le temps d'intégration est long. Cette suppression du bruit de fond permet de limiter le temps d'intégration effectif au temps où des photons sont détectés.

Il existe aussi des variantes de ce principe de suppression de bruit de fond. On peut par exemple ajouter un dispositif de décalage 26 sur la ligne de détection de minimum (par exemple entre la sortie de l'amplificateur 8 et l'entrée du détecteur de minimum 14) comme on le voit sur la figure 5, de façon que le résultat de la soustraction mathématique soit négatif pour le niveau de repos entre les impulsions. Ceci permet de choisir une valeur Vseuil nulle pour l'ébaseur 24.

L'exploitation des impulsions qui sont fournies par le soustracteur et sont débarrassés de leur traîne et de leur courant d'obscurité dépend de l'application que l'on souhaite faire de l'invention. On peut citer, entre autres, une intégration analogique (au moyen d'un intégrateur) et un comptage. Dans le cas où l'on souhaite faire un comptage, la suppression de la traîne et du courant d'obscurité permet au seuil analogique destiné à déclencher le comptage d'être bien défini. Une autre application possible est une spectrométrie et, dans ce cas, le fait d'avoir enlevé la traîne qui est mal connue, améliore la résolution énergétique.

Les dispositifs conformes à l'invention, qui sont schématiquement représentés sur les figures 6, 8 et 9, sont directement inspirés du dispositif de la figure 4 mais sont cependant plus complexes que ce dernier. On y trouve par exemple quatre amplificateurs au lieu de l'amplificateur 8 et du soustracteur 12 de la figure 4, ce soustracteur pouvant être réalisé par exemple avec deux amplificateurs.

En revanche, le dispositif de la figure 6 présente l'avantage de travailler avec des charges. En effet, étant donné des charges engendrées dans le détecteur 2 lorsque ce dernier reçoit des photons X, ce dispositif permet de transférer ces charges vers un condensateur 28 puis vers un autre condensateur 30 sans modifier ces charges. La charge totale qui arrive sur le condensateur 30 ne dépend donc pas des valeurs exactes des composants utilisés (résistances, condensateurs, décalages (en anglais « offsets ») et gains des amplificateurs).

Dans le cas où l'on utilise plusieurs détecteurs 2 de photons X, formant par exemple une barrette ou une matrice, chacun de ces détecteurs ayant un étage de lecture, il est intéressant de poursuivre l'exploitation des charges engendrées dans les détecteurs, en aval des condensateurs 30 qui sont respectivement associés aux détecteurs.

On peut par exemple transférer, les unes après les autres, les charges accumulées dans les condensateurs 30, dans un unique dispositif de conversion de charges en tensions. Cela est représenté schématiquement sur la figure 7 sur laquelle on reviendra par la suite. On dispose ainsi d'un moyen électronique de lecture qui ne perturbe pas l'homogénéité des détecteurs par ses propres dispersions.

Revenons au dispositif de la figure 6. Sur cette figure 6, on voit un détecteur 32 destiné à détecter le rayonnement 4 constitué de photons X. Ce détecteur 32 est un photoconducteur dont la cathode est polarisée par une haute tension négative -Vpol et dont la borne d'anode A est reliée à un dispositif conforme à l'invention. Le détecteur 32 fournit au dispositif conforme à l'invention (circuit de lecture) un flux d'électrons. Il en résulte un courant Id sortant du dispositif dans le sens conventionnel du courant.

Le dispositif conforme à l'invention de la figure 6 comprend un premier amplificateur différentiel 34 dont l'entrée + est portée à une tension V0 de l'ordre de 1V et dont l'entrée - est reliée à l'anode A. Ce dispositif comprend aussi un transistor MOS 36 de type N, dont la grille, le drain et la source sont respectivement reliés à la sortie de l'amplificateur 34, à une borne B et à la borne d'anode A.

Le dispositif comprend aussi une résistance 38 connectée entre la borne B et une autre borne E du dispositif. Ce dispositif comprend aussi le condensateur 28, qui est connecté entre la borne B et la masse, ainsi qu'un deuxième amplificateur différentiel 40 dont l'entrée + est reliée à la borne B et dont l'entrée - est reliée à la borne de sortie C de cet amplificateur. Le dispositif comprend en outre :
- une diode 42 dont l'anode est reliée à la borne C et la cathode à une borne D,
- un condensateur 44 monté entre la borne D et la masse,
- une résistance 46 montée entre la borne D et la masse,
- un troisième amplificateur différentiel 48 dont l'entrée - est reliée à la borne D et dont l'entrée + est portée à une tension V1,
- un générateur de courant 50 qui est prévu pour fournir un courant I1 à la borne B et qui est commandé par la sortie de l'amplificateur 48,
- un quatrième amplificateur différentiel 52 dont l'entrée - est reliée à la borne E du dispositif et dont l'entrée + est reliée à la borne D,
- un autre transistor MOS 54 de type N, dont la source, le drain et la grille sont respectivement reliés à la borne E, à la borne de sortie F du dispositif et à la sortie de l'amplificateur 52, et
- le condensateur 30 qui est monté entre la borne F et la masse.

La borne F est reliée à des moyens électroniques (non représentés) de traitement du signal fourni par le détecteur 32 et amélioré grâce au dispositif conforme à l'invention.

Le flux d'électrons mentionné plus haut est injecté dans le condensateur 28 par l'intermédiaire du transistor 36 qui est polarisé par l'amplificateur 34.

Cet amplificateur 34 a pour fonction de porter la borne A à la tension V0, de faciliter l'injection du flux d'électrons à travers le transistor 36, en diminuant l'impédance apparente de ce transistor 36, et de réduire le bruit d'injection à travers ce transistor 36.

L'ensemble formé par l'amplificateur 34, le transistor 36 et le condensateur 28 remplit la fonction de l'amplificateur 8 et de l'impédance 10 du dispositif de la figure 4.

Il convient cependant de noter que le dispositif de la figure 6 n'est pas inverseur, contrairement à celui de la figure 4. On obtient donc, en la borne B, une impulsion de tension négative pour chaque photon X détecté (alors que l'impulsion de tension obtenue à la sortie de l'amplificateur 8 de la figure 4 est positive).

Dans ce cas, pour mettre en oeuvre l'invention, il faut prévoir un détecteur de maximum au lieu d'un détecteur de minimum.

Ce détecteur de maximum est formé par l'amplificateur 40, la diode 42, le condensateur 44 et la résistance 46. Par rapport au dispositif de la figure 4, on a ajouté l'amplificateur 40 (amplificateur-suiveur) dans le cas de la figure 6 car l'information disponible à la borne B est sous haute impédance. Cette information est seulement constituée par la tension développée sur le condensateur 28 par la charge injectée. La constante de temps R2.C2, où R2 est la valeur de la résistance 46 et C2 la capacité du condensateur 44, vaut par exemple 30 µs si la durée de l'impulsion correspondant à une impulsion due à un photon X est de l'ordre de 1 µs.

Dans le cas de la figure 6, le soustracteur est constitué par l'amplificateur 52, la résistance 38, le transistor 54 et le condensateur 30. La partie impulsionnelle de la charge arrivant sur le condensateur 28 est donc injectée dans le condensateur 30 à travers la résistance 38 et le transistor 54.

L'amplificateur 52 a deux fonctions :
- par contre-réaction, il rend le potentiel de la borne E égal à celui de la borne D, c'est-à-dire au maximum qui s'établit entre les impulsions et c'est donc grâce à cet amplificateur que l'on n'injecte que la partie impulsionnelle du signal dans le condensateur 30 et
- il accélère l'injection à travers le transistor 54 en réduisant son impédance apparente.

La constante de temps R1.C1, où R1 est la valeur de la résistance 38 et C1 est la capacité du condensateur 28, est choisie de façon à avoir l'ordre de grandeur de la durée des impulsions, par exemple quelques centaines de nanosecondes.

En fait, il faut que cette constante de temps ne soit pas trop courte afin qu'une impulsion d'électrons injectée dans le condensateur 28 ait le temps de développer une impulsion de tension sur ce condensateur 28 et permette donc la mesure du maximum de tension entre impulsions avec le détecteur dé maximum, avant d'être évacuée vers le condensateur 30 par l'intermédiaire de la résistance 38.

Cette résistance 38 permet aussi que, en cas de variation du courant d'obscurité, une différence de tension apparaisse en la borne B et soit mesurable par le détecteur de maximum.

On a donc réalisé la soustraction de la traîne et du courant d'obscurité, avant l'injection dans le condensateur 30 mais cette traîne et ce courant d'obscurité s'accumulent dans ce condensateur 30 et font dériver le potentiel en la borne B.

Afin d'éviter une saturation en cette borne B, il faut donc évacuer de cette borne B un flux d'électrons dont la valeur moyenne est égale à la somme de la traîne et du courant d'obscurité. Pour ce faire, on peut asservir la valeur du maximum détecté à la tension V1 par l'intermédiaire de l'amplificateur 48 et de la source de courant commandée 50.

Revenons à la figure 7. Elle concerne le traitement de signaux fournis par plusieurs détecteurs non représentés, du genre du détecteur 32 de la figure 6. Ces détecteurs sont respectivement suivis de dispositifs conformes à l'invention. Seuls les condensateurs respectifs 30 de ces dispositifs sont représentés sur la figure 7.

Les sorties F de ces dispositifs sont respectivement reliées aux entrées d'un unique dispositif de conversion de charges en tensions 56. Les signaux fournis par ce dispositif 56 sont traités dans des moyens appropriés 58 qui dépendent de l'application que l'on fait des détecteurs utilisés.

Les figures 8 et 9 sont des variantes du dispositif de la figure 6 et n'en diffèrent que par la façon de réaliser le détecteur de maximum. I1 convient de noter que ces modes de réalisation du détecteur de maximum sont connus de l'homme du métier et seulement donnés à titre d'exemple : d'autres détecteurs de maximum sont utilisables dans l'invention.

Dans l'exemple de la figure 8, la diode 42 est remplacée par un transistor MOS 60 de type N. Un tel transistor est souvent plus simple à réaliser qu'une diode. On voit que la grille de ce transistor 60 est reliée à la sortie de l'amplificateur 40, que son drain est porté à une tension Vdd par des moyens non représentés et que sa source est reliée à la borne D du dispositif. Cette borne D est également reliée à l'entrée - de l'amplificateur.

L'exemple de la figure 9 montre une autre variante de la figure 6 dans laquelle la diode 42 est remplacée par un transistor MOS 62 de type P dont la grille est encore reliée à la sortie de l'amplificateur 40, la source est portée à la tension Vdd et le drain est relié à la borne D. On voit que, dans le cas de la figure 9, il faut inverser les entrées de l'amplificateur 40 par rapport à l'exemple de la figure 8.

Par rapport au dispositif de la figure 8, le détecteur de maximum utilisé dans l'exemple de la figure 9 est capable de travailler sur une plus grande plage de tension.

Dans une troisième variante de la figure 6, qui n'est pas représentée, la résistance 38 est supprimée : le rôle de cette résistance est alors rempli par la résistance d'entrée de l'ensemble formé par le quatrième amplificateur 52 et le transistor 54.

La présente invention n'est pas limitée à des dispositifs destinés à être associés à des détecteurs de rayons X. Les exemples de l'invention que l'on a donnés peuvent être adaptés à des détecteurs de photons γ ou d'autres particules.

De plus, l'invention n'est pas limitée à des dispositifs destinés à être associés à des détecteurs prévus pour fournir des électrons lorsqu'ils reçoivent des particules. Les exemples que l'on a donnés peuvent être adaptés à des détecteurs prévus pour fournir des trous. En particulier, les schémas des figures 4 à 9 sont relatifs aux électrons mais peuvent être aisément adaptés aux trous par l'homme du métier, en particulier en changeant le sens de la diode et en changeant la référence de masse en référence de tension.

## Revendications

1. Dispositif d'amélioration du signal fourni par un détecteur de particules (2, 32), notamment un détecteur de photons, ce détecteur étant apte à fournir des impulsions de courant lorsqu'il reçoit ces particules, le dispositif comprenant des moyens (8, 10 ; 28, 34, 36) de transformation des impulsions de courant en impulsions de tension, ce dispositif étant **caractérisé en ce qu'**il comprend en outre :
- des moyens (16, 18 ; 40, 42-60-62, 44) de détection d'un extremum de tension entre une impulsion de tension fournie par les moyens de transformation et une impulsion de tension suivante,
- des moyens (12 ; 30, 52, 54) de soustraction de la valeur de l'extremum ainsi détecté à cette impulsion de tension fournie par les moyens de transformation, de manière à améliorer le signal correspondant, fourni par le détecteur, et
- des moyens (20, 46) de réinitialisation de l'extremum.

2. Dispositif selon la revendication 1, dans lequel les moyens de transformation comprennent un amplificateur (8) qui est pourvu d'une impédance de contre-réaction (10).

3. Dispositif selon la revendication 2, dans lequel cette impédance (10) est une résistance.

4. Dispositif selon la revendication 2, dans lequel cette impédance (10) est un condensateur entre les bornes duquel est montée une résistance.

5. Dispositif selon la revendication 1, dans lequel les moyens de transformation comprennent :
- un premier condensateur (28),
- un premier transistor (36) par l'intermédiaire duquel les charges engendrées dans le détecteur, par les particules détectées par ce dernier, sont transférées au premier condensateur, et
- un premier amplificateur (34) prévu pour polariser ce premier transistor.

6. Dispositif selon la revendication 1, dans lequel les moyens de détection de l'extremum de tension comprennent :
- une diode (16), qui est montée entre la sortie des moyens de transformation et les moyens de soustraction, et
- un condensateur (18), qui est monté entre une source de tension continue et une borne qui est commune aux moyens de soustraction et à la diode.

7. Dispositif selon la revendication 1, dans lequel les moyens de détection de l'extremum de tension comprennent :
- un deuxième amplificateur (40) qui est relié à un premier condensateur,
- un deuxième condensateur (44) monté entre la sortie des moyens de détection de l'extremum et une source de-tension continue,
- une résistance (46) montée entre la sortie des moyens de détection de l'extremum et une source de tension continue,
- des moyens de redressement de tension (42-60-62) qui relient le deuxième amplificateur au deuxième condensateur, et
- un troisième amplificateur (48) prévu pour asservir la valeur de l'extremum détecté à une tension prédéfinie.

8. Dispositif selon la revendication 7, dans lequel les moyens de redressement de tension sont choisis parmi une diode (42), un transistor MOS de type N (60), et un transistor MOS de type P (62).

9. Dispositif selon la revendication 1, dans lequel les moyens de soustraction comprennent :
- un troisième condensateur (30),
- un deuxième transistor (54) à travers lequel la partie impulsionnelle de la charge arrivant à un premier condensateur est envoyée au troisième condensateur, et
- un quatrième amplificateur (52) prévu pour réduire l'impédance apparente du deuxième transistor.

10. Dispositif selon la revendication 9, dans lequel les moyens de soustraction comprennent en outre une autre résistance (38) qui est montée entre le premier condensateur et le deuxième transistor.

11. Dispositif selon la revendication 1, dans lequel les moyens de réinitialisation comprennent une résistance (20) qui est montée entre une borne des moyens de soustraction et une source de tension (22).

12. Dispositif selon la revendication 1, comprenant en outre des moyens (24) de suppression du bruit de fond qui est susceptible d'affecter le signal fourni par les moyens de soustraction.

13. Dispositif selon la revendication 12, dans lequel les moyens de suppression de bruit comprennent des moyens de décalage de tension (26) du signal, qui sont placés entre la sortie des moyens de transformation et une borne des moyens de soustraction.

## Claims

1. Device for improving the signal provided by a particle detector (2, 32), especially a photon detector, this detector being able to provide current pulses when it receives these particles, the device comprising means (8, 10; 28, 34, 36) for transforming the current pulses into voltage pulses, this device being **characterised in that** it furthermore comprises:
- means (16, 18; 40, 42-60-62, 44) for detection of a voltage extremum between a voltage pulse provided by the transformation means and a following voltage pulse,
- means (12; 30, 52, 54) for subtracting the value of the extremum thus detected from this voltage pulse provided by the transformation means, in such a way as to improve the corresponding signal, provided by the detector, and
- means (20, 46) for resetting the extremum.

2. Device according to claim 1, wherein the transformation means comprise an amplifier (8) provided with a feedback impedance (10).

3. Device according to claim 2, wherein this impedance (10) is a resistor.

4. Device according to claim 2, wherein this impedance (10) is a capacitor with a resistor mounted between its terminals.

5. Device according to claim 1, wherein the transformation means comprise:
- a first capacitor (28),
- a first transistor (36) through which the charges produced in the detector, by the particles detected by the later, are transferred to the first capacitor, and
- a first amplifier (34) intended to polarize this first transistor.

6. Device according claim 1, wherein the means for detection of the voltage extremum comprise:
- a diode (16), mounted between the transformation means output and the subtraction means, and
- a capacitor (18), mounted between a continuous voltage source and a terminal common to both the subtraction means and the diode.

7. Device according to claim 1, wherein the means for detection of the voltage extremum comprise:
- a second amplifier (40) connected to a first capacitor,
- a second capacitor (44) mounted between the output of the extremum detection means and a continuous voltage source,
- a resistor (46) mounted between the output of the extremum detection means and a continuous voltage source,
- means for voltage rectification (42-60-62) connecting the second amplifier to the second capacitor, and
- a third amplifier (48) intended to slave the value of the extremum detected to a predefined voltage.

8. Device according to claim 7, wherein the voltage rectification means are chosen from amongst a diode. (42), an N type MOS transistor (60) and a P type MOS transistor (62).

9. Device according to claim 1, wherein the subtraction means comprise:
- a third capacitor (30),
- a second transistor (54) through which the pulse part of the charge arriving at a first capacitor is sent on to the third capacitor, and
- a fourth amplifier (52) provided for reducing the apparent impedance of the second transistor.

10. Device according to claim 9, wherein the subtraction means further comprise another resistor (38) mounted between the first capacitor and the second transistor.

11. Device according to claim 1, wherein the resetting means comprise a resistor (20) mounted between a terminal of the subtraction means and a voltage source (22).

12. Device according to claim 1, further comprising means (24) for suppressing the background noise which is susceptible to disturb the signal provided by the subtraction means.

13. Device according to claim 12, wherein the noise suppression means comprise means for voltage offset (26) of the signal, placed between the output of the transformation means and a terminal of the subtraction means.

## Patentansprüche

1. Vorrichtung zur Verbesserung des durch einen Teilchendetektor (2, 32) - insbesondere einen Photonendetektor - gelieferten Signals, wobei dieser Detektor fähig ist, Stromimpulse zu liefern, wenn er diese Teilchen aufnimmt,
diese Vorrichtung Einrichtungen (8, 10 ; 28, 34, 36) zur Umwandlung der Stromimpulse in Spannungsimpulse enthält,
diese Vorrichtung **dadurch gekennzeichnet ist, dass** sie außerdem umfasst:
- Einrichtungen (16, 18 ; 40, 42-60-62, 44) zur Detektion eines Extremwerts zwischen einem durch die Umwandlungseinrichtungen gelieferten Spannungsimpuls und einem nachfolgenden Spannungsimpuls,
- Einrichtungen (12 ; 30, 52, 54) zur Subtraktion des bei diesem durch die Umwandlungseinrichtungen gelieferten Spannungsimpuls detektierten Extremwerts, um das entsprechende durch den Detektor gelieferte Signal zu verbessern, und
- Einrichtungen (20, 46) zur Reinitialisierung des Extremwerts.

2. Vorrichtung nach Anspruch 1, bei der die Umwandlungseinrichtungen einen Verstärker (8) umfassen, der mit einer Rückkopplungsimpedanz (10) versehen ist.

3. Vorrichtung nach Anspruch 2, bei der diese Impedanz (10) ein Widerstand ist.

4. Vorrichtung nach Anspruch 2, bei der diese Impedanz (10) ein Kondensator ist, zwischen dessen Anschlüssen ein Widerstand geschaltet ist.

5. Vorrichtung nach Anspruch 1, bei der die Umwandlungseinrichtungen umfassen:
- einen ersten Kondensator (28),
- einen ersten Transistor (36), mittels dem die Ladungen, erzeugt in dem Detektor durch die von diesem letzteren detektierten Teilchen, zu dem ersten Kondensator transferiert werden, und
- einen ersten Verstärker (34) um diesen ersten Transistor zu polarisieren.

6. Vorrichtung nach Anspruch 1, bei der die Einrichtungen zur Detektion des Spannungsextremwerts umfassen:
- eine Diode (16), geschaltet zwischen dem Ausgang der Umwandlungseinrichtungen und den Subtraktionseinrichtungen, und
- einen Kondensator (18), geschaltet zwischen einer Gleichstromquelle und einem gemeinsamen Anschluss der Subtraktionseinrichtungen und der Diode.

7. Vorrichtung nach Anspruch 1, bei der die Detektionseinrichtungen des Spannungsextremwerts umfassen:
- einen zweiten Verstärker (40), verbunden mit einem ersten Kondensator,
- einen zweiten Kondensator (44), geschaltet zwischen dem Ausgang der Extremwert-Detektionseinrichtungen und einer Gleichstramciuelle,
- einen Widerstand (46), geschaltet zwischen dem Ausgang der Extremwert-Detektionseinrichtungen und einer Gleichstromquelle,
- Gleichrichtereinrichtungen (42-60-62), die den zweiten Verstärker mit dem zweiten Kondensator verbinden, und
- einen dritten Verstärker (48), dazu bestimmt, den detektierten Extremwert auf eine vorbestimmte Spannung zu regeln.

8. Vorrichtung nach Anspruch 7, bei der die Spannungsgleichrichtereinrichtungen ausgewählt werden unter einer Diode (42), einem MOS-Transistor des Typs N (60) und einem MOS-Transistor des Typs P (62).

9. Vorrichtung nach Anspruch 1, bei der die Subtraktionseinrichtungen umfassen:
- einen dritten Kondensator (30),
- einen zweiten Transistor (54), durch den der Impulsteil der bei einem ersten Kondensator eintreffenden Landung zum dritten Kondensator geleitet wird, und
- einen vierten Verstärker (52), vorgesehen um die Scheinimpedanz des zweiten Transistor zu reduzieren.

10. Vorrichtung nach Anspruch 9, bei der die Subtraktionseinrichtungen außerdem einen anderen Widerstand (38) umfassen, geschaltet zwischen dem ersten Kondensator und dem zweiten Transistor.

11. Vorrichtung nach Anspruch 1, bei der die Reinitialisierungseinrichtungen einen Widerstand (20) umfassen, geschaltet zwischen einem Anschluss der Subtraktionseinrichtungen und einer Spannungsquelle (22).

12. Vorrichtung nach Anspruch 1 mit außerdem Einrichtungen (24) zur Unterdrückung des Hintergrundgeräusches, welches das durch die Subtraktionseinrichtungen gelieferte Signal beeinträchtigten könnte.

13. Vorrichtung nach Anspruch 12, bei dem die Einrichtungen zur Unterdrückung des Hintergrundgeräusches Signaloffsetspannungseinrichtungen (26) umfassen, geschaltet zwischen dem Ausgang der Umwandlungseinrichtungen und einem Anschluss der Subtraktionseinrichtungen.
